# EUROPÄISCHE PATENTSCHRIFT

(11) **EP 2 387 446 B1**
(45) Veröffentlichungstag und Bekanntmachung des Hinweises auf die Patenterteilung: **14.06.2017**
(21) Anmeldenummer: 10704493.5
(22) Anmeldetag: 15.01.2010
(51) Int. Cl.: B01D 46/00

(54) **KOMBINATIONSFILTER**
COMBINATION FILTER
FILTRE COMBINÉ

(30) Priorität: 15.01.2009 DE 102009005158
(43) Veröffentlichungstag der Anmeldung: 23.11.2011
(73) Patentinhaber: Donaldson Filtration Deutschland GmbH, 42781 Haan (DE)
(72) Erfinder: SCHUSTER, Hans-Michael, 42781 Haan (DE); WALDSCHMIDT-SCHROER, Sylke, 40699 Erkrath (DE)
(74) Vertreter: von Renesse, Dorothea
(86) Internationale Anmeldenummer: PCT/EP2010/000208
(87) Internationale Veröffentlichungsnummer: WO 2010/081717

(56) Entgegenhaltungen:
- DE-A1- 1 544 086
- DE-A1- 2 945 798
- US-A- 3 464 186
- US-A- 5 284 997
- US-A- 5 427 609
- US-A1- 2007 089 382

## Beschreibung

Die Erfindung betrifft einen Kombinationsfilter aus zumindest einem Koaleszenzfilterelement sowie einem Aufbereitungsfilterelement.

Derartige Kombinationsfilter werden im Stand der Technik beispielsweise in Verbindung mit Kompressoren verwendet, um u.a. Ölaerosole und Öldampf, die sich durch den Betrieb des Kompressors mit der Druckluft vermischen, wieder aus dieser herauszufiltern. Dadurch soll beispielsweise eine Beschädigung nachfolgender Maschinen oder die negative Beeinflussung von Prozessen, in denen die Druckluft verwendet wird, verhindert werden.

Zur Abscheidung der Ölaerosole ist es aus dem Stand der Technik bekannt, sogenannte Koaleszenzfilter zu verwenden. Koaleszenzfilter weisen in der Regel Filterelemente aus einem relativ durchlässigen Fasergewebe auf, durch die die zu reinigende Druckluft geführt wird, wobei Ölaerosole auf die Filterfasern auftreffen und an diesen aufgrund ihrer adhäsiven Wirkung hängen bleiben. Die einzelnen, im Koaleszenzfilterelement hängen bleibenden Ölaerosole fließen hierbei zu größeren Tröpfchen zusammen, die wiederum aufgrund ihrer Gewichtskraft in dem unteren Bereich des Filterelements zusammenlaufen, von diesem abtropfen und in Auffangbehältern aufgefangen werden.

Als Aufbereitungsfilterelemente kommen beispielsweise Öldampfadsorberfilter zum Einsatz. Diese dienen dazu, Öldampf, der von dem Koaleszenzfilterelement nicht herausgefiltert wird, abzuscheiden. Häufig sind derartige Öldampfadsorberfilter mit einem Aktivkohlefilterelement versehen, wobei die Aktivkohleteilchen den in der Druckluft enthaltenen Öldampf binden.

Aus dem Stand der Technik ist es weiterhin bekannt, Aktivkohlefilter mit einem nachgeschalteten Staubfilter zu kombinieren, der dafür vorgesehen ist, Kohlepartikel, die beim Durchströmen des Aktivkohlefilterelements von der Druckluft mitgenommen werden, aus der Druckluft zu filtern.

Aus der DE 29 45 798 A1 ist ein dreistufiger Flüssigkeitsabscheider bekannt, der einen Agglomerator zur Abscheidung von Flüssigkeitsteilchen in dem Gasstrom, einen in Strömungsrichtung dahinter angeordneten Filter zum Abtrennen von feinsten flüssigen Teilchen sowie einen dahinter angeordneten Adsorber zum Abtrennen von Dämpfen umfasst. Der Adsorber kann hierzu Aktivkohle enthalten.

Die US 5,427,609 A offenbart einen Kombinationsfilter, der zur Filterung von Druckluft in dem Bremssystem eines LKWs zum Einsatz kommen soll. Der Kombinationsfilter umfasst eine Filtereinheit, die in einem Gehäuse angeordnet ist. Die Filtereinheit umfasst einen Koaleszenzfilter, der von innen nach außen von der Druckluft durchströmt wird. Die den Koaleszenzfilter verlassende Druckluft wird dann durch zwei übereinander angeordnete Planfilter geleitet, die Aktivkohle sowie aktiviertes Aluminiumoxid enthalten und dazu dienen, Ölaerosole herauszufiltern. Die gereinigte Druckluft durchströmt daraufhin einen Behälter, in dem ein Trocknungsmittel angeordnet ist, durch das der Druckluft die Feuchtigkeit entzogen wird. Direkt angrenzend an das Auslassende des Trockenmittelbehälters ist ein weiterer Filter vorgesehen, der dafür vorgesehen ist, Staub, der sich durch ein Auflösen des Trocknungsmittels bildet, herauszufiltern.

Die DE 15 44 086 A1 offenbart einen Abscheider zur Gasreinigung mit einem Gehäuse, in dem ein Koaleszenzfilter und - in Strömungsrichtung dahinter - ein Aufbereitungsfilterelement in Form eines Aktivkohlefilters angeordnet sind. Der Koaleszenzfilter wird von einer Vielzahl von "Tröpfchenzusammenballungseinheiten" gebildet, die im oberen Bereich des Gehäuses direkt im Anschluss an die Einlassöffnungen des Gehäuses angeordnet sind. Das mittels der Tröpfchenzusammenballungseinheiten vorgereinigte Gas strömt daraufhin durch eine zylindrische Absorptionseinheit, die mit einem porösen Adsorbens beispielsweise Aktivkohle gefüllt sein kann. Nachdem das Gas die Absorptionseinheit durchströmt hat, wird dieses über eine Auslassleitung aus dem Filter abgeführt.

Die US 5,284,997 A offenbart ein zweistufiges Filterelement für den Einsatz beim vollständigen Entleeren von Sprühdosen für beispielsweise Farben oder andere Chemikalien. Der Kombinationsfilter umfasst einen Koaleszenzfilter und ein in Strömungsrichtung dahinter angeordnetes zweites Filterelement, das Aktivkohle umfassen kann. Das zweite Filterelement dient dazu, Lösungsmittel aus dem mittels des Koaleszenzfilters vorgereinigten Gas zu entfernen. Der Kombinationsfilter umfasst zudem noch ein drittes Filterelement, das das obere Ende des Aktivkohlefilters abschließt und dazu dient, ein Eindringen von Staub und Dreck in den Aktivkohlefilter zu verhindern. Das Koaleszenzfilterelement einerseits und der Aktivkohle- und Staubfilter andererseits sind in einem eigenen Gehäuse angeordnet.

Die US 2007/0089382 A1 offenbart ein Kompressorsystem mit zwei Filtern, die dazu dienen, Schmieröl des Kompressors aus der Druckluft zu entfernen. Der in Strömungsrichtung "nachgeschaltete" der beiden Filter umfasst wiederum zwei hintereinander angeordnete Filterelemente, nämlich ein unteres Filterelement, das als Koaleszenzfilter wirkt, sowie ein oberes, in Strömungsrichtung hinter dem unteren Filterelement angeordnetes Filterelement, das Aktivkohle umfasst.

US 3,464,186 A offenbart einen Trockner für Druckfluidsysteme, der diskontinuierlich betrieben wird, um einen Speicher zu füllen. Es wird ein Einsatz beschrieben, der in einem unteren Bereich ein Koaleszenzelement aufweist. Das zu trocknende Druckfluid strömt durch das Koaleszenzelement und nachfolgend durch ein Bett aus Adsorptionsmaterial wobei sich an das Adsorptionsmaterial ein Partikelfilterelement 236 anschließt.

Im Stand der Technik ist vorgesehen, die einzelnen Filterelemente, d.h. Koaleszenzfilter, Öldampfadsorberfilter und gegebenenfalls Partikelfilter separat hintereinander in die Druckluftversorgungsleitung zu integrieren. Hierdurch soll nicht nur die Herstellung der einzelnen Filter vereinfacht und dadurch verbilligt werden, sondern die separate Integration der Filterelemente in die Druckluftversorgungsleitungen dient insbesondere dazu, die einzelnen Filterelemente nur bedarfsweise austauschen zu können, wenn die Lebensdauer des jeweiligen Filterelements abgelaufen ist. Hierdurch sollen die Kosten für die Verwendung der Filter möglichst gering gehalten werden. Mit der separaten Integration der Filterelemente in die Druckluftversorgungsleitungen ist jedoch ein erhöhter Platzbedarf sowie ein erhöhter Wartungsaufwand verbunden.

Ausgehend von diesem Stand der Technik lag der Erfindung die Aufgabe zugrunde, einen verbesserten Filter anzugeben, der insbesondere kompakt und/oder wartungsfreundlich ist.

Diese Aufgabe wird durch einen Kombinationsfilter gemäß dem unabhängigen Patentanspruch 1 gelöst. Vorteilhafte Ausführungsformen dieses Kombinationsfilters sind Gegenstand der abhängigen Patentansprüche 2 bis 5 und ergeben sich aus der nachfolgenden Beschreibung der Erfindung.
Ein erfindungsgemäßer Kombinationsfilter umfasst zumindest ein Gehäuse mit einem Ein- sowie einem Auslass für ein zu reinigendes Fluid (insbesondere Druckluft) sowie ein Koaleszenzfilterelement und ein Aufbereitungsfilterelement, die innerhalb des Gehäuses derart angeordnet sind, dass sie von dem Fluid, nachdem es durch den Einlass in das Gehäuse eingetreten ist, in der angegeben Reihenfolge von dem Fluid durchströmt werden, bevor das Fluid wieder durch den Auslass aus dem Gehäuse austritt.

Erfindungsgemäß ist daher vorgesehen, die zumindest zwei Filterelemente in ein einziges, gegebenenfalls mehrteiliges Gehäuse zu integrieren und hierdurch eine kompakte Einheit des mehrere Filterelemente aufweisenden Kombinationsfilters zu schaffen. Ein solcher erfindungsgemäßer Kombinationsfilter kann sich durch eine kompakte Form und insbesondere eine geringe Bauhöhe auszeichnen. Ein weiterer wesentlicher Vorteil kann zudem in der einfachen Handhabbarkeit liegen, da lediglich ein einziger erfindungsgemäßer Kombinationsfilter in die Versorgungsleitungen für das Fluid integriert werden muss. Ein erfindungsgemäßer Kombinationsfilter eignet sich daher beispielsweise vorteilhaft als kompakte Aufbereitungseinheit für Kleinkompressoren (beispielsweise für Lackierarbeiten) oder für die Druckluftaufbereitung an anspruchsvollen Endstellen von Druckluftsystemen (z.B. Versorgung einer Messmaschine/Laserschneidanlage), wo die Option, jedes der Filterelemente separat austauschen zu können, von eher untergeordneter Bedeutung ist und der Vorteil, lediglich einen einzigen, besonders kompakten Kombinationsfilter in unmittelbarer Nähe des Verbrauchers anzuschließen, überwiegt.

In dem erfindungsgemäßen Kombinationsfilter sind das Koalezenzfilterelement und das Aufbereitungsfilterelement in einen Einsatz integriert, der auswechselbar in dem Gehäuse des Kombinationsfilters angeordnet ist. Dies ermöglicht, die als Verschleißteile ausgelegten Filterelemente in einem einfach auswechselbaren und ggf. kostengünstig aus Kunststoff gefertigten Einsatz zusammenzufassen, der dann in das Gehäuse, das ggf. druckfest aus Metall und insbesondere als Gussbauteil ausgebildet sein kann, und kein Verschleißteil darstellt, eingesetzt wird. In das Gehäuse können dann vorzugsweise alle weiteren Bestandteile des Kombinationsfilters, die keine Verschleißteile sind, integriert werden, z.B. ein Drainage-Ventil ggf. mit Füllstandssensor, eine Differenzdruckmessvorrichtung, etc.. Diese Ausgestaltung eines erfindungsgemäßen Kombinationsfilters ist kostengünstig herstellbar und zeichnet sich durch einen geringen Wartungsaufwand aus.

Als "Aufbereitungselement" wird erfindungsgemäß ein Filterelement verstanden, das durch eine physikalisch oder chemische Wechselwirkung mit dem zu reinigenden Fluid eine Reinigungswirkung entfaltet und insbesondere Partikel (fest, flüssig und/oder gasförmig) aus dem Fluid entfernt. Das Aufbereitungselement kann insbesondere zum Entfernen von verschiedenen gas-/dampfförmigen Inhaltsstoffen (z.B. Kohlenwasserstoffen, CO, CO₂, SO₂, NOₓ, O₃, etc.) aus einem Gasstrom mit verschiedenen Adsorbentien und/oder Katalysatoren gefüllt sein. Je nach eingesetztem Material kann es sich um Granulat, gesinterte Formstücke, Monolithen oder auch Fasern in Form eines Gewebes oder Fasergemisches (gebunden oder ungebunden) handeln.

Das Koaleszenzfilterelement kann vorzugsweise aus einem Hochleistungs-Tiefenfiltermedium bestehen, wie es üblicherweise bei der Koaleszenzfiltration im Allgemeinen und insbesondere als Vorstufe von adsorptiv arbeitenden Gas- bzw. Druckluftaufbereitungsstufen (Öldampfadsorber, Trockner, Stufen für die CO- und/oder CO₂-Entfernung) eingesetzt wird. Der aerosolförmige Restölgehalt hinter dem Koaleszenzfilter sollte 0,05 mg/m³ (gemessen nach ISO 8573-2, Methode B2) nicht übersteigen, damit die Poren des Adsorbens in dem folgenden Aufbereitungsmodul nicht durch z.B. Öltröpfchen blockiert werden.

Vorzugsweise kann es sich bei dem Aufbereitungsfilterelement um ein Öldampfadsorberfilterelement und besonders bevorzugt um ein Aktivkohlefilterelement handeln. Ein Aktivkohlefilterelement gewährleistet in der Regel bei geringen Kosten eine gute Abscheidung von Öldampf aus z.B. Druckluft.

In einer besonders bevorzugten Ausführungsform des erfindungsgemäßen Kombinationsfilters kann zusätzlich noch ein Partikelfilterelement hinter dem Aufbereitungsfilterelement angeordnet und in das Gehäuse des Kombinationsfilters integriert werden. Ein solches Partikelfilterelement kann die Qualität der Fluidfilterung weiter erhöhen, indem beispielsweise Aktivkohlepartikel, die sich beim Durchströmen des beispielsweise als Aktivkohlefilterelement ausgebildeten Aufbereitungsfilterelement aus diesem lösen, herausgefiltert werden.

Als Filtermaterial für das Partikelfilterelement kommen sowohl gesinterte Materialien (z.B. PE, Bronze, PP, etc.) als auch Faserfilter (Glasfaserpapier, genadelte Polymerfasern, etc.) in Frage. Die Porenweite kann sehr weit variiert werden (z.B. im Bereich von 0,01µm bis 100µm) und hängt insbesondere von der gewünschten Partikelfreiheit des Gases hinter dem Kombinationsfilter ab.

Das Partikelfilterelement kann vorzugsweise ebenfalls als Planfilterelement ausgebildet sein, um wiederum platzsparend in das Gehäuse des Kombinationsfilters integriert werden zu können und insbesondere eine geringe Bauhöhe aufzuweisen.

Es wird beschrieben, dass das Koaleszenzfilterelement in dem Gehäuse als unterstes der Filterelemente angeordnet sein kann, wobei dieses von dem Fluid von oben nach unten durchströmt und das Fluid vor dem Durchströmen des nachfolgenden Aufbereitungsfilterelement umgelenkt werden kann. Durch diese Anordnung des Koaleszenzfilterelements kann erreicht werden, dass die von diesem herausgefilterten Teilchen und insbesondere Ölaerosole direkt in einen Auffangbereich abtropfen können, der direkt unterhalb des Koaleszenzfilterelements angeordnet oder auch von dem Gehäuse des Kombinationsfilters ausgebildet werden kann.

Das Koaleszenzfilterelement als unterstes Filterelement weist einen zylindrischen Filtermantel auf, der radial durchströmt wird. Es ist ein unterer Deckel vorgesehen, der eine Öffnung aufweist, durch den zu größeren Öltröpfchen zusammengeflossene Ölaerosole abtropfen können. Das Koaleszenzfilterelement ist über einen oberen Deckel an das Aufbereitungsfilterelement, welches longitudinal durchströmt wird, angebunden, wobei der obere Deckel eine integrierte Stützscheibe für das Aufbereitungsfilterelement aufweist, und der Einsatz mit dem Gehäuse einen ringförmigen Einlasskanal und das obere Ende des Einsatzes einen Auslasskanal ausbilden.

Es wird ferner beschrieben, dass das Koaleszenzfilterelement rohrförmig ausgebildet sein kann, mit einem Gehäusemantel, dessen eines offenes Ende durch ein Koaleszenzfiltermaterial verschlossen ist und dessen anderes offenes Ende als Anschluss zur Befestigung an einem Öldampfabsorberfilterelement ausgebildet ist, wobei die zwei offenen Enden durch eine diagonal verlaufende Trennwand voneinander getrennt sind. Ein solches Koaleszenzfilterelement weist eine äußerst kompakte Bauform auf.

Es wird ferner beschrieben, dass das Koaleszenzfiltermaterial eines solchen Koaleszenzfilterelements als Planfilter ausgebildet ist, dessen Filterebene parallel zu der von dem Anschluss gebildeten Ebene angeordnet ist. Hierdurch kann ein besonders kompaktes Koaleszenzfilterelement ausgebildet werden.

Die Erfindung wird nachfolgend anhand von in den Zeichnungen dargestellten Ausführungsbeispielen näher erläutert.

In den Zeichnungen zeigt:
- Fig. 1:: in einem Längsschnitt einen Kombinationsfilter,
- Fig. 2:: in einem Längsschnitt einen anderen Kombinationsfilter ,
- Fig. 3:: das bei dem Kombinationsfilter der Fig. 2 verwendete Koaleszenzfilterelement in einer isometrischen Schnittdarstellung und
- Fig. 4:: in einem Längsschnitt einen erfindungsgemäßen Kombinationsfilter.

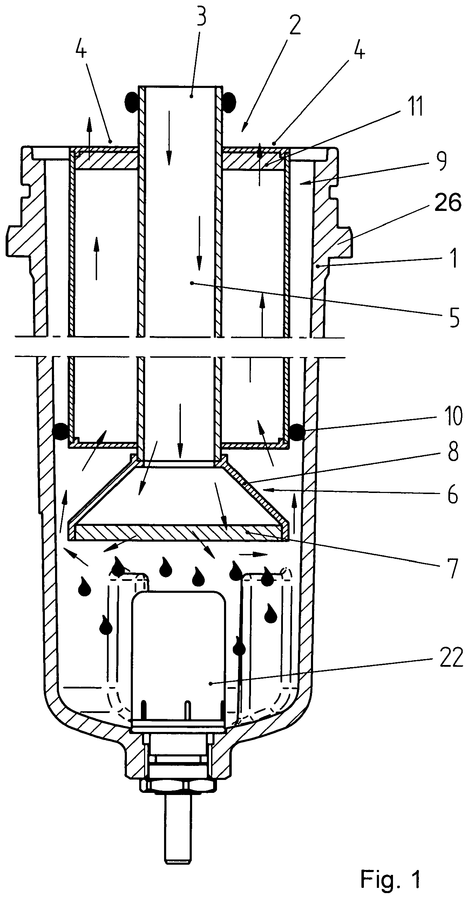

Die Fig. 1 zeigt einen Kombinationsfilter in einer ersten Ausführungsform. Der Kombinationsfilter umfasst ein Gehäuse, von dem lediglich ein Gehäuseunterteil 1 dargestellt ist. Das Gehäuseunterteil 1 weist einen kreisförmigen Querschnitt auf, wobei das Gehäuseunterteil an seinem unteren Ende eine im Durchmesser kleine Öffnung aufweist, in die ein Drainageventil integriert ist. Das offene obere Ende des Gehäuseunterteils ist für einen Anschluss an ein nicht dargestelltes Gehäuseoberteil vorgesehen, mit dem es mittels eines Bajonettverschlusses verbunden wird. Das Gehäuseunterteil weist hierfür entsprechende Rastelemente 26 auf. In dem Gehäuseunterteil 1 ist ein Einsatz 2 angeordnet. In den Einsatz 2 ist ein Einlass- 3 sowie ein ringförmiger Auslasskanal 4 integriert, die sich mit entsprechenden Einlass- und Auslassöffnungen in dem Gehäuseoberteil decken, über die der Kombinationsfilter wiederum an eine Zuführ- bzw. Abführleitung einer Druckluftversorgung angeschossen werden kann. Der zentral angeordnete Einlasskanal 3 für die Druckluft geht direkt in ein zentral innerhalb des Gehäuses 1 angeordnetes Tauchrohr 5 über, über das die Druckluft zu einem im unteren Abschnitt des Gehäuses 1 angeordnetes Koaleszenzfilterelement 6 geleitet wird.

Das Koaleszenzfilterelement 6 umfasst einen kreisförmigen Planfilter 7, dessen Außendurchmesser geringfügig kleiner als der Innendurchmesser des Gehäuseunterteils 1 an dieser Stelle ist. Die aus dem Tauchrohr 5 kommende Druckluft wird über ein trichterförmiges Gehäusebauteil 8 des Koaleszenzfilterelements 6 zu dem Planfilter 7 geführt, wobei Ölaerosole, die in der Druckluft enthalten sind, beim Durchtreten durch das Filtermaterial des Planfilters 7 hängen bleiben, dabei zu größeren Öltröpfchen zusammenfließen und aufgrund ihrer Gewichtskraft von dem Planfilter 7 abtropfen. Die Öltröpfchen werden in dem nach unten geschlossenen Gehäuseunterteil 1 aufgefangen.

In den unteren Teil des Gehäuseunterteils 1 ist das Drainageventil 22 integriert, das mit einem Füllstandssensor versehen ist, durch den das Drainageventil 22 ab einer bestimmten Füllhöhe des aus der Druckluft mittels des Koaleszenzfilterelements 6 herausgefilterten Öls öffnet, wodurch das Öl aus dem Kombinationsfilter abgeführt werden kann.

Die Druckluft wird, nachdem diese durch das Koaleszenzfilterelement 6 hindurchgetreten ist, umgelenkt und über den Ringspalt, der zwischen dem Koaleszenzfilterelement 6 sowie dem Gehäuseunterteil 1 ausgebildet ist, wieder nach oben abgeführt, woraufhin die Druckluft in ein ringförmiges Aktivkohlefilterelement 9 einströmt, das mit Aktivkohleteilchen (nicht dargestellt) gefüllt ist, die den in der Druckluft enthaltenen Öldampf herausfiltern. Um ein Vorbeiströmen der Druckluft durch den Ringspalt zwischen dem Aktivkohlefilterelement 9 sowie dem Gehäuseunterteil 1 zu verhindern, ist dieser Ringspalt durch eine Dichtung 10 abgedichtet.

Die obere Öffnung des ringförmigen Aktivkohlefilterelements 9 ist mit einem als ringförmiger Planfilter ausgebildeten Partikelfilterelement 11 verschlossen, durch den Kohlepartikel, die beim Durchströmen des Aktivkohlefilterelements 9 durch die Druckluft gelöst werden, aufgefangen und somit aus der Druckluft gefiltert werden.

Nach dem Durchströmen des Partikelfilterelements 11 wird die nunmehr gereinigte Druckluft durch den in den Einsatz 2 integrierten Auslasskanal 4 wieder abgeführt.

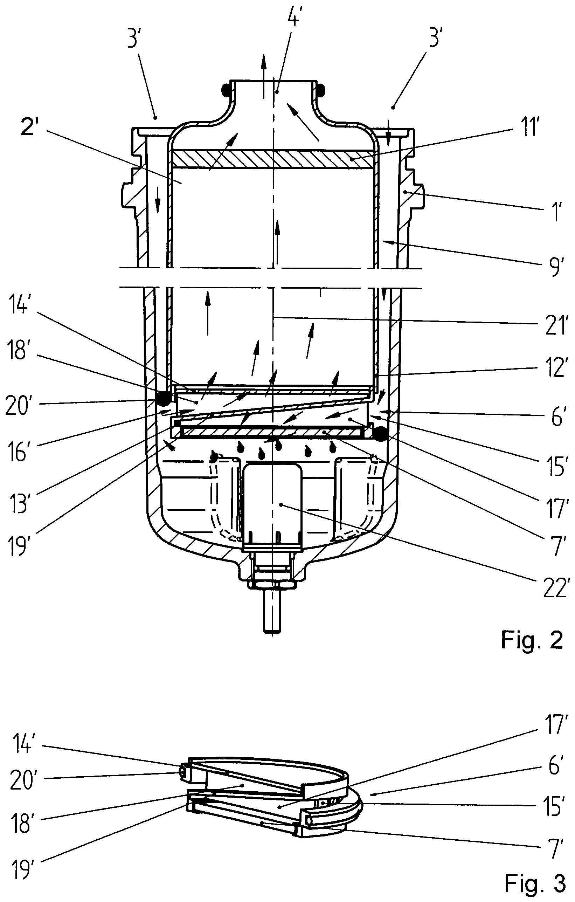

Die Fig. 2 zeigt einen Kombinationsfilter in einer alternativen Ausführungsform. Dieser weist ebenfalls ein an der Unterseite abgeschlossenes, zylindrisches Gehäuseunterteil 1' auf. In dem Gehäuseunterteil ist ein Filtereinsatz 2' angeordnet, der einen Auslasskanal 4' aufweist; Zwischen dem Filtereinsatz und dem oberen Rand des Gehäuseunterteils 1' wird zudem ein ringförmiger Einlasskanal 3' ausgebildet. Über den Einlass- 3' bzw. den Auslasskanal 4' und entsprechende Einlass- und Auslassöffnungen in einem nicht dargestellten Gehäuseoberteil kann der Kombinationsfilter an die Versorgungsleitungen einer Druckluftversorgung angeschlossen werden. Die Druckluft wird über den Einlasskanal 3' in den Kombinationsfilter eingebracht und strömt über einen ringförmigen Spalt, der zwischen dem Gehäuse 1' sowie einem zylindrischen Gehäusebauteil 12' des Aktivkohlefilterelements 9' ausgebildet ist, in Richtung des unteren Abschnitts des Kombinationsfilters, in dem das Koaleszenzfilterelement 6' angeordnet ist.

Das Koaleszenzfilterelement 6' weist ebenfalls ein zylindrisches Gehäusebauteil 13' auf, dessen unteres Ende mit einem als Planfilter 7' ausgebildeten Koaleszenzfiltermaterial verschlossen ist. Über die obere Öffnung des zylindrischen Gehäusebauteils 13' des Koaleszenzfilterelements 6' ist dieses direkt an das Gehäusebauteil 12' des darüberliegenden Aktivkohlefilterelements 9' angeschlossen, wobei eine aus Vlies bestehende Stützscheibe 14' ein Herabfallen der Aktivkohlepartikel (nicht dargestellt) in das Koaleszenzfilterelement 6' verhindert. Die durch den Ringraum zwischen dem Aktivkohlefilterelement 9' sowie dem Gehäuseunterteil 1' zugeführte Druckluft strömt über erste seitliche Einlassöffnungen 15' in dem Gehäusebauteil 13' des Koaleszenzfilterelements 6' in diesen ein und tritt durch den Planfilter 7' hindurch, wodurch Ölaerosole aus der Druckluft herausgefiltert werden. Die Druckluft wird daraufhin umgelenkt und strömt über zweite seitliche Auslassöffnungen 16' in dem Gehäusebauteil 13' des Koaleszenzfilterelements 6' wiederum in das Koaleszenzfilterelement 6' ein, um über die obere Öffnung des Gehäusebauteils 13' in das Aktivkohlefilterelement 9' einzuströmen.

Beim Durchströmen des Aktivkohlefilterelements 9' wird der in der Druckluft enthaltene Öldampf zu einem großen Teil herausgefiltert, wobei der Öldampf von den Aktivkohleteilchen gebunden wird.

Das obere Ende des Aktivkohlefilterelements 9' wird von einem Partikelfilterelement 11' verschlossen, durch das Aktivkohlepartikel, die beim Durchströmen des Aktivkohlefilterelements 9' von der Druckluft mitgerissen werden, herausgefiltert werden.

Nachdem die Druckluft durch das Partikelfilterelement 11' hindurchgetreten ist, wird diese durch den Auslasskanal 4' wieder aus dem Kombinationsfilter abgeführt.

Das bei dem Kombinationsfilter der Fig. 2 verwendete Koaleszenzfilterelement 6' zeichnet sich durch eine kompakte und platzsparende Bauweise aus, wobei durch die Trennung des von dem zylindrischen Gehäusebauteils 13' begrenzten Innenraums in einen Einlass- 17' sowie einen Auslassraum 18' mittels einer diagonal verlaufenden Trennwand 19' erreicht werden kann, dass trotz der kompakten Bauweise nahezu die gesamte Querschnittsfläche des Kombinationsfilterelements 6' für das als Planfilter 7' ausgebildete Koaleszenzfiltermaterial genutzt werden kann. Die Trennung des Koaleszenzfilterelements 6' in einen Einlass- 17' sowie einen Auslassraum 18' mittels der diagonal verlaufenden Trennwand 19' erfordert eine komplex ausgebildete Dichtung zwischen dem Koaleszenzfilterelement 6' und dem Gehäuseunterteil 1' des Kombinationsfilters. Diese Dichtung wird mittels eines herkömmlichen O-Rings 20' erzielt, wobei die Nut zur Aufnahme des O-Rings 20' so ausgebildet ist, dass die von dem O-Ring 20' gebildete Ebene nicht senkrecht zu der Längsachse 21' des Kombinationsfilters ausgerichtet ist (vgl. Fig. 3).

In den unteren Teil des Gehäuseunterteils 1' ist ein Drainageventil 22' integriert, das mit einem Füllstandssensor versehen ist, durch den das Drainageventil 22' ab einer bestimmten Füllhöhe des aus der Druckluft mittels des Koaleszenzfilterelements 6' herausgefilterten Öls öffnet, wodurch das Öl aus dem Kombinationsfilter abgeführt werden kann.

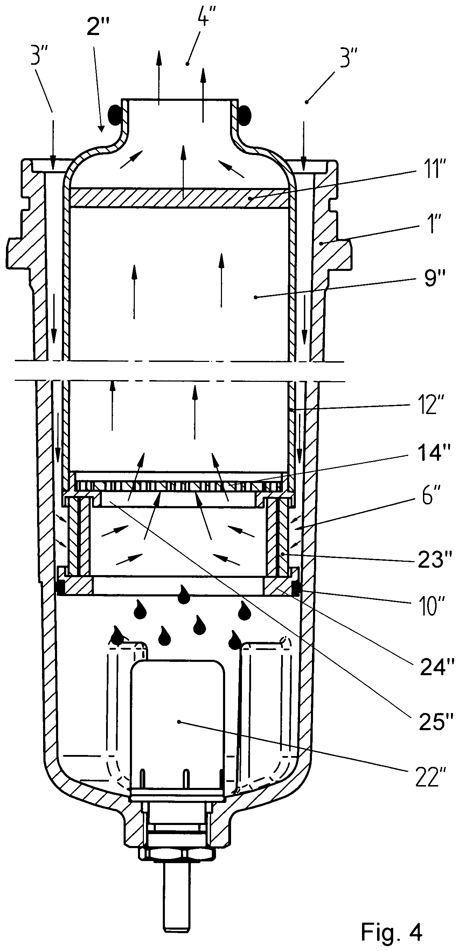

Die Fig. 4 zeigt eine Ausführungsform eines erfindungsgemäßen Kombinationsfilters. Der Aufbau dieses Kombinationsfilters unterscheidet sich von demjenigen der Fig. 2 lediglich in der Ausgestaltung des Koaleszenzfilterelements 6". In Übereinstimmung mit dem Kombinationsfilter der Fig. 2 weist der Kombinationsfilter der Fig. 4 somit ein Gehäuseunterteil 1" auf, in den ein Filtereinsatz 2" und ein Drainageventil 22" integriert ist. Der Filtereinsatz 2" bildet mit dem Gehäuseunterteil 1" einen ringförmigen Einlasskanal 3" aus. Das obere Ende des Filtereinsatzes bildet einen Auslasskanal 4" aus. Die zu reinigende Druckluft strömt über den ringförmigen, von der Innenseite des Gehäuseunterteils 1" und einem zylindrischen Gehäusebauteil 12" gebildeten Einlasskanal 3" in den Kombinationsfilter ein, daraufhin durch das Koaleszenzfilterelement 6" und von dort über eine in das Koaleszenzfilterelement 6" integrierte Stützscheibe 14" in das Aktivkohlefilterelement 9", bevor es den Kombinationsfilter wieder über den Auslasskanal 4" verlässt.

Das Koaleszenzfilterelement ist bei der Ausführungsform des erfindungsgemäßen Kombinationsfilters gemäß der Fig. 4 mit einem zylindrischen Filtermantel 23" versehen. Die zu reinigende Druckluft durchströmt dabei nahezu die gesamte Fläche des Filtermantels 23", wobei die Ölaerosole, die in der Druckluft enthalten sind, beim Durchtreten durch das Filtermaterial des Filtermantels 23" hängen bleiben, dabei zu größeren Öltröpfchen zusammenfließen und aufgrund ihrer Gewichtskraft durch eine Öffnung in einem unteren Deckel 24" des Koaleszenzfilterelements 6" abtropfen. Über einen oberen Deckel 25", in den auch die Stützscheibe 14" integriert ist, ist das Koaleszenzfilterelement 6" direkt an das Aktivkohlefilterelement 9" angebunden. Durch den zylindrischen Filtermantel 23" kann auf einfache Weise ein Koaleszenzfilterelement mit einer relativ großen Filterfläche erzeugt werden. Zudem besteht auf einfache Weise die Möglichkeit, die Fläche des Filtermantels 23" zulasten/zugunsten des Aktivkohlefilterelements 9" zu vergrößern/verkleinern, um so flexibel die Volumenstromleistung des Kombinationsfilters und die Adsorptionskapazität des Koaleszenzfilterelements aufeinander abzustimmen.

Die konstruktiven und funktionellen Details der beschriebenen Ausführungsbeispiele sind nicht lediglich in der konkret offenbarten Kombination anwendbar, sondern diese können in beliebiger Kombination auch bei beliebigen anderen erfindungsgemäßen Kombinationsfiltern gemäß Anspruch 1 zur Anwendung kommen.

## Patentansprüche

1. Kombinationsfilter umfassend ein Gehäuse mit einem Ein- sowie einem Auslass für ein zu reinigendes Fluid, ein Koaleszenzfilterelement (6") und ein Aufbereitungsfilterelement, wobei das Koaleszenzfilterelement und das Aufbereitungsfilterelement in dem Gehäuse derart angeordnet sind, dass sie von dem Fluid, nachdem es durch den Einlass in das Gehäuse eingetreten ist, in der angegebenen Reihenfolge von dem Fluid durchströmt werden, bevor das Fluid wieder durch den Auslass aus dem Gehäuse austritt, wobei das Koaleszenzfilterelement (6") und das Aufbereitungsfilterelement in einem Einsatz integriert sind, der auswechselbar in dem Gehäuse angeordnet ist und das Koaleszenzfilterelement (6") als unterstes Filterelement einen zylindrischen Filtermantel (23") aufweist, der radial durchströmt wird, **dadurch gekennzeichnet, dass** ein unterer Deckel (24") vorgesehen ist, der eine Öffnung aufweist, durch den zu größeren Öltröpfchen zusammengeflossene Ölaerosole abtropfen können, und das Koaleszenzfilterelement (6") über einen oberen Deckel (25") an das Aufbereitungsfilterelement, welches longitudinal durchströmt wird, angebunden ist, wobei der obere Deckel eine integrierte Stützscheibe (14") für das Aufbereitungsfilterelement aufweist, und der Einsatz mit dem Gehäuse einen ringförmigen Einlasskanal (3") und das obere Ende des Einsatzes einen Auslasskanal (4") ausbilden.

2. Kombinationsfilter gemäß Anspruch 1, **dadurch gekennzeichnet, dass** das Aufbereitungsfilterelement als Öldampfabsorberfilterelement und insbesondere als Aktivkohlefilterelement (9") ausgebildet ist.

3. Kombinationsfilter gemäß einem der vorhergehenden Ansprüche, **gekennzeichnet durch** ein hinter dem Aufbereitungsfilterelement angeordnetes Partikelfilterelement (11").

4. Kombinationsfilter gemäß Anspruch 3, **dadurch gekennzeichnet, dass** das Partikelfilterelement (11") als Planfilter ausgebildet ist.

5. Kombinationsfilter gemäß Anspruch 3 oder 4, **dadurch gekennzeichnet, dass** das Partikelfilterelement (11") in dem Einsatz integriert ist.

## Claims

1. Combination filter comprising a housing with an inlet as well as an outlet for a fluid to be cleaned, a coalescence filter element (6") and a preparation filter element, wherein the coalescence filter element and the preparation filter element are arranged in the housing in such a way that the fluid is passed through in the sequence stated after is has been supplied into the housing through the inlet before the fluid leaves the housing again through the outlet, wherein the coalescence filter element (6") and the preparation filter element are integrated in one insert that is replaceably arranged in the housing and the coalescence filter element (6") has a cylindrical filter sleeve (23") as a the lowest filter element, through which the fluid passes radially, **characterised in that** a lower lid (24") is envisaged, which has an opening, through which oil aerosols flowed together to form larger oil drops can drip off, and **in that** the coalescence filter element (6") is bound to the preparation filter element, through which the fluid flows longitudinally, above an upper lid (25"), wherein the upper lid has an integrated support disc (14") for the preparation filter element, and the insert forms an annular inlet channel (3") with the housing and the upper end of the insert forms an outlet channel (4").

2. Combination filter according to claim 1, **characterised in that** the preparation filter element is designed as an oil vapour absorber filter element, and in particular as an active carbon filter element (9").

3. Combination filter according to one of the preceding claims, **characterised by** a particle filter element (11") arranged behind the preparation filter element.

4. Combination filter according to claim 3, **characterised in that** the particle filter element (11") is designed as a plan filter.

5. Combination filter according to claim 3 or 4, **characterised in that** the particle filter element (11") is integrated in the insert.

## Revendications

1. Filtre combiné comportant un boîtier avec une entrée et une sortie pour un fluide à purifier, un élément de filtre à coalescence (6") et un élément de filtre de prétraitement, l'élément de filtre à coalescence et l'élément de filtre de prétraitement étant agencés dans le boîtier de sorte qu'ils sont traversés par le fluide dans l'ordre indiqué après que celui-ci est entré dans le boîtier par l'entrée et avant que celui-ci ne ressorte du boîtier par la sortie, l'élément de filtre à coalescence (6") et l'élément de filtre de prétraitement étant intégrés dans un insert, agencé dans le boîtier de manière à pouvoir être échangé et l'élément de filtre à coalescence (6") présentant en tant qu'élément de filtre le plus bas une enveloppe de filtre cylindrique (23") traversée par le fluide de manière radiale, **caractérisé en ce qu'**un couvercle inférieur (24") est prévu qui présente une ouverture et par lequel des aérosols d'huile coalescés à des gouttes d'huile plus grandes peuvent s'égoutter et l'élément de filtre à coalescence (6") est attaché par un couvercle supérieur (25") à l'élément de filtre de prétraitement qui est traversé longitudinalement, le couvercle supérieur présentant un disque de support (14") pour l'élément de filtre de prétraitement et l'insert avec le boîtier formant un orifice d'admission annulaire (3") et l'extrémité supérieure de l'insert un orifice de sortie (4").

2. Filtre combiné selon la revendication 1, **caractérisé en ce que** l'élément de filtre de prétraitement est formé en tant qu'élément de filtre absorbant la vapeur d'huile et notamment en tant qu'élément de filtre à charbon actif (9").

3. Filtre combiné selon l'une des revendications précédentes, **caractérisé en ce qu'**il comprend un élément de filtre de prétraitement agencé en aval de l'élément de filtre à particules (11").

4. Filtre combiné selon la revendication 3, **caractérisé en ce que** l'élément de filtre à particules (11") est formé en tant que filtre plat.

5. Filtre combiné selon la revendication 3 ou 4, **caractérisé en ce que** l'élément de filtre à particules (11") est intégré dans l'insert.
